# EUROPEAN PATENT SPECIFICATION

(11) **EP 1 931 045 B1**
(45) Date of publication and mention of the grant of the patent: **01.08.2012**
(21) Application number: 07122201.2
(22) Date of filing: 04.12.2007
(51) Int. Cl.: B60R 11/02

(54) **In-vehicle electronic apparatus and in-vehicle electronic system**
Elektronisches Gerät und elektronisches System in Fahrzeugen
Appareil électronique embarqué et système électronique embarqué

(30) Priority: 04.12.2006 JP 2006327663; 04.12.2006 JP 2006327664; 04.12.2006 JP 2006327665; 27.12.2006 US 645629; 27.12.2006 US 645642; 27.12.2006 US 645628; 27.12.2006 US 645672; 28.12.2006 US 646539; 28.12.2006 US 646477; 28.12.2006 US 646557; 28.12.2006 US 646478; 28.12.2006 US 646558; 28.12.2006 US 646498; 28.12.2006 US 646538; 28.12.2006 US 646479
(43) Date of publication of application: 11.06.2008
(73) Proprietor: FUJITSU TEN LIMITED, Kobe-shi Hyogo 652-8510 (JP)
(72) Inventor: Takimoto, Tatsuhiko, Hyogo-ku, Kobe-shi, Hyogo 652-8510 (JP); Koutari, Hiroshi, Hyogo-ku, Kobe-shi, Hyogo 652-8510 (JP)
(74) Representative: Ward, James Norman

(56) References cited:
- EP-A1- 0 580 157
- US-A- 4 389 639
- US-A1- 2001 018 663

## Description

This invention relates to in-vehicle electronic apparatuses and in-vehicle electronic systems, more particularly, to an electronic apparatus to which a portable navigation apparatus is attached and an electronic system therefor.

As conventional navigation apparatuses, there are widely known small-sized portable navigation apparatuses with simplified structure and portability (hereinafter, referred to as Portable Navi), also known as Personal Navigation Device; and in-vehicle navigation apparatuses accommodated and fixed in a recess portion (DIN opening) formed in a dashboard of a vehicle. The in-vehicle navigation apparatuses are capable of guiding with high accuracy by use of the information supplied from vehicles such as vehicle speed, and some of the in-vehicle navigation apparatuses are equipped with audio devices.

In recent years, the navigation apparatuses with portability of the Portable Navi and high-accuracy guide function of the in-vehicle navigation apparatus have been studied.

Japanese Patent Application Publication No. 8-318792, Japanese Patent Application Publication No. 2002-328026, Japanese Patent Application Publication No. 2005-524570, and Japanese Patent Application Publication No. 2001-239895 disclose a configuration where a navigation portion can be detached from an in-vehicle apparatus mounted in a vehicle. By removing the navigation portion from the in-vehicle apparatus, the navigation portion can be used as a Portable Navi of a single unit. Also, as disclosed in Japanese Patent Application Publication No. 2003-166848, the navigation apparatus is taken out of the vehicle and can be used while walking. In addition, when mounted in a vehicle, the navigation apparatus is in a carnavigation mode, and when taken out of the vehicle, the navigation apparatus is in a person-navigation mode.

In some cases, from a detachable portable navigation apparatus to an in-vehicle electronic apparatus, the navigation audio information and music data or the like is output.

In the afore-mentioned case, audio information for navigation and that for music data or the like are sent by different connecting lines (cables or the like) from the portable navigation apparatus to the in-vehicle electronic apparatus. In this manner, since two types of audio information are sent to the in-vehicle electronic apparatus from the portable navigation apparatus, two connecting lines and two connectors are needed, impeding the reduction in size and cost. In addition, since it is enough for some passengers to hear the navigation guidance, it may be annoying for other passengers.

EP0580157 discloses an apparatus for facilitating volume control of a guidance voice supplied to a loudspeaker in a vehicle navigation system.

US2001/0018663 discloses a position based personal digital assistant.

The present invention has been made in view of the above circumstances and provides an in-vehicle electronic apparatus and an in-vehicle electronic system (i.e. an apparatus and system suitable for in-vehicle use), in which the size and cost thereof can be reduced and annoyance for a passenger can be attenuated.

According to one aspect of the present invention, there is provided an in-vehicle electronic apparatus as defined in claim 1. Since the first audio information and the second audio information are received by one connecting line, thereby necessitating only one connecting line and one connector, a reduction in size and cost is enabled. In addition, the navigation audio is output from one of the sound outputting portions, and the second audio information can be output from one of the outputting portions. This can mitigate the discomfort of the passenger due to the navigation audio.

Exemplary embodiments of the present invention will be described in detail with reference to the following drawings, by way of example only, wherein:
FIG. 1A and FIG. 1B show exterior views of an in-vehicle system employed in an exemplary embodiment of the present invention;
FIG. 2 shows a front face portion of the in-vehicle apparatus, from which the portable apparatus is removed;

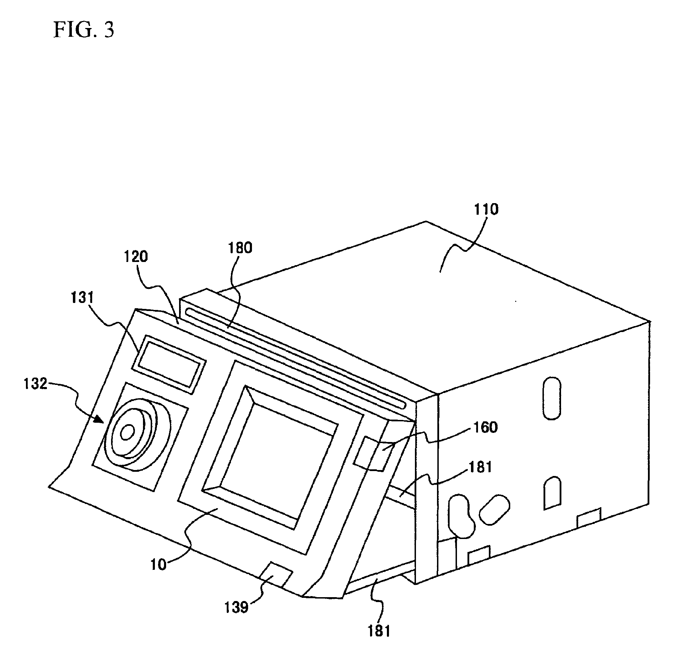

FIG. 3 is a view showing a state of tilting the front face portion against the main body of the in-vehicle apparatus to expose a CD insertion/ejection audio information output by the portable navigation apparatus and second audio information through the portable navigation apparatus; an audio selector provided in the in-vehicle electronic apparatus and configured to output the first audio information to at least one of the multiple audio outputting portions, when the audio information is the first audio information, and to output the second audio information to the multiple audio outputting portions, when the audio information is the second audio information; and a controller provided in the in-vehicle electronic apparatus and configured to control the audio selector on the basis of audio identification information representing whether the audio information output from the portable navigation apparatus is the first audio information or the second audio information, when the portable navigation apparatus is attached. Since the first audio information and the second audio information are received by one connecting line, thereby necessitating only one connecting line and one connector, a reduction in size and cost is enabled. The system also enables the passenger's discomfort to be mitigated.

Exemplary embodiments of the present invention will be described in detail with reference to the following drawings, by way of example only, wherein:

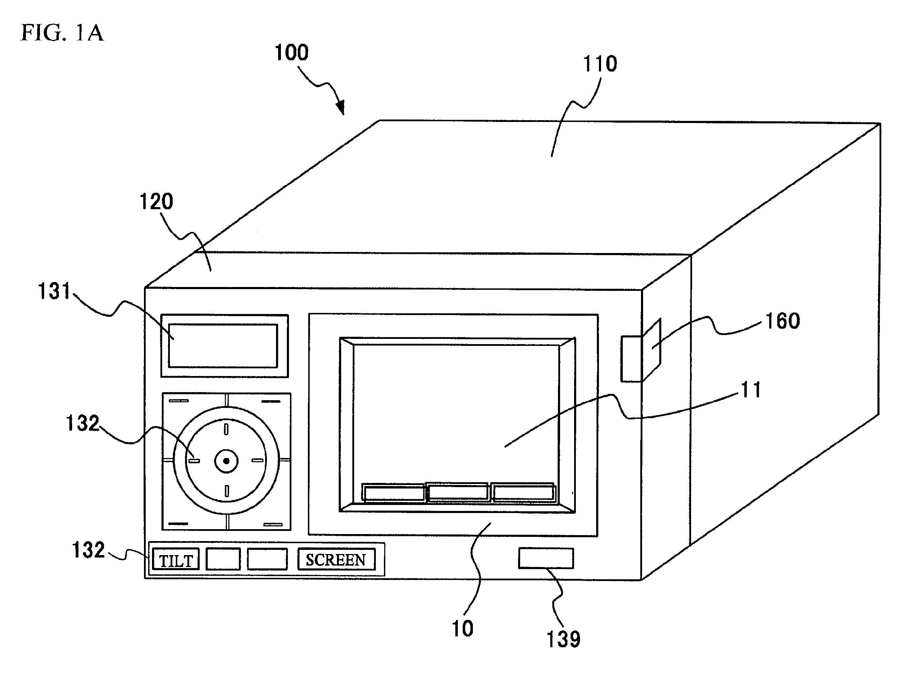

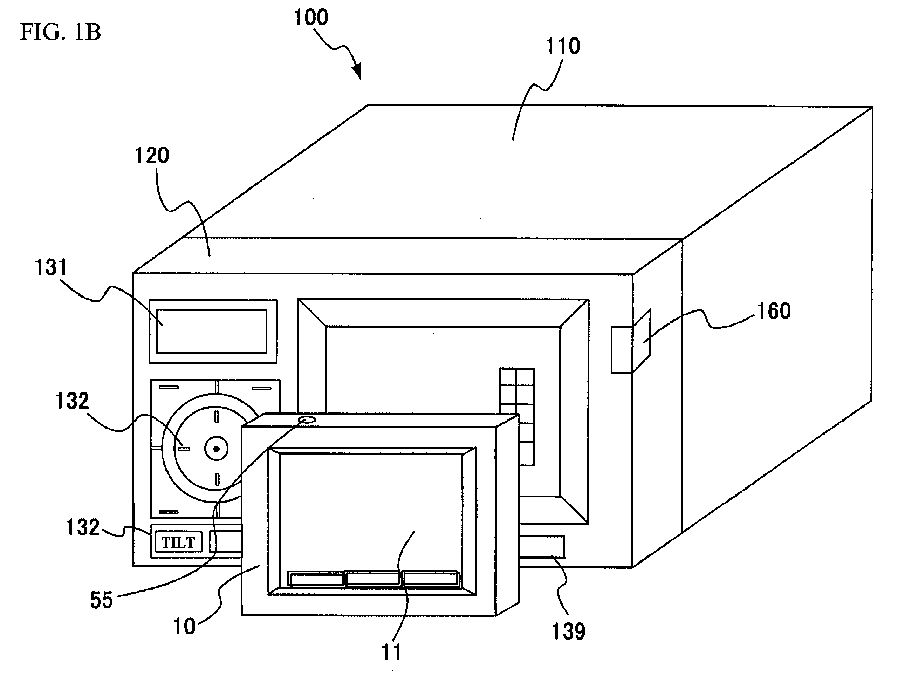

FIG. 1A and FIG. 1B show exterior views of an in-vehicle system employed in an exemplary embodiment of the present invention;

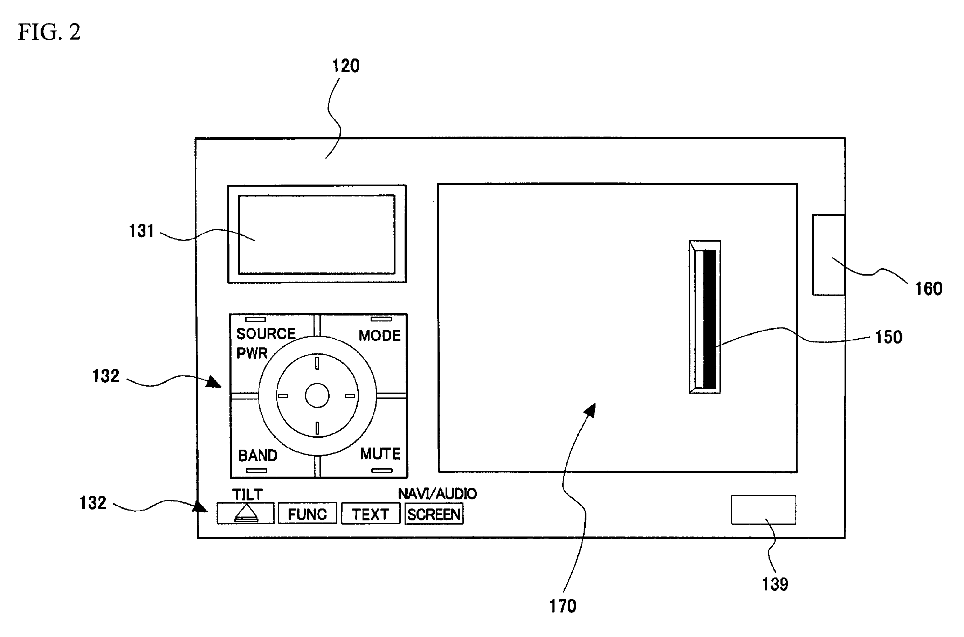

FIG. 2 shows a front face portion of the in-vehicle apparatus, from which the portable apparatus is removed;
FIG. 3 is a view showing a state of tilting the front face portion against the main body of the in-vehicle apparatus to expose a CD insertion/ejection slot;

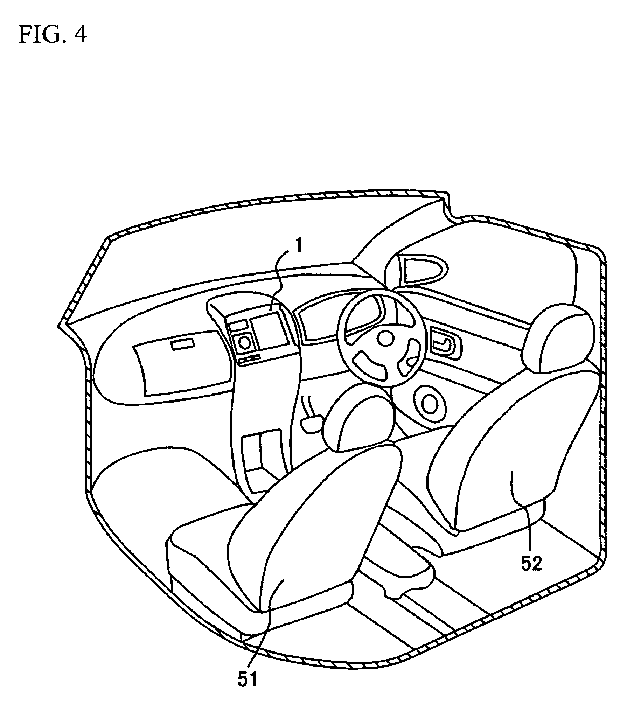

FIG. 4 shows a state of mounting the in-vehicle system in a vehicle;

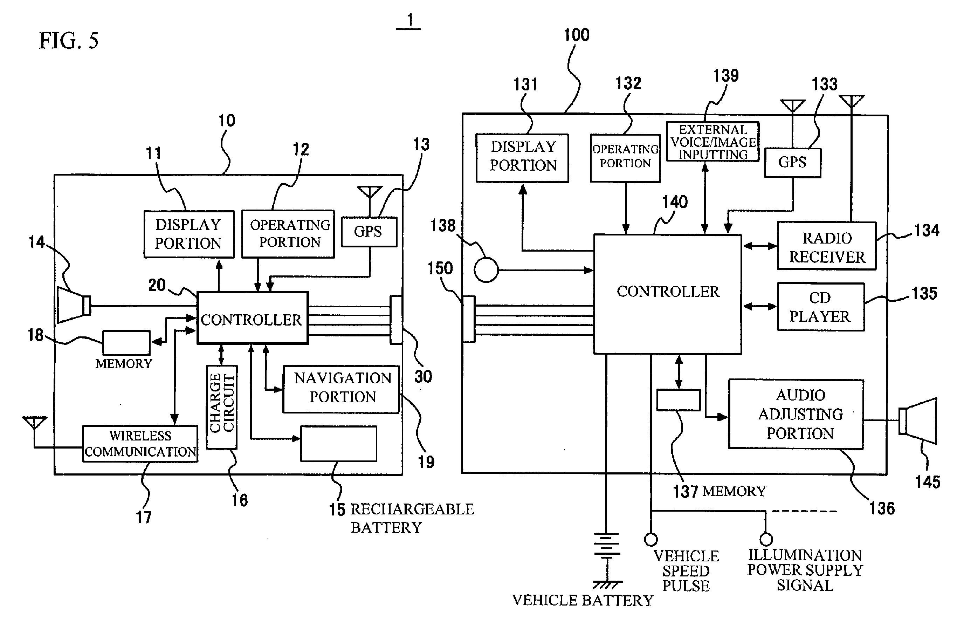

FIG. 5 is a block diagram showing a schematic configuration of the in-vehicle system;

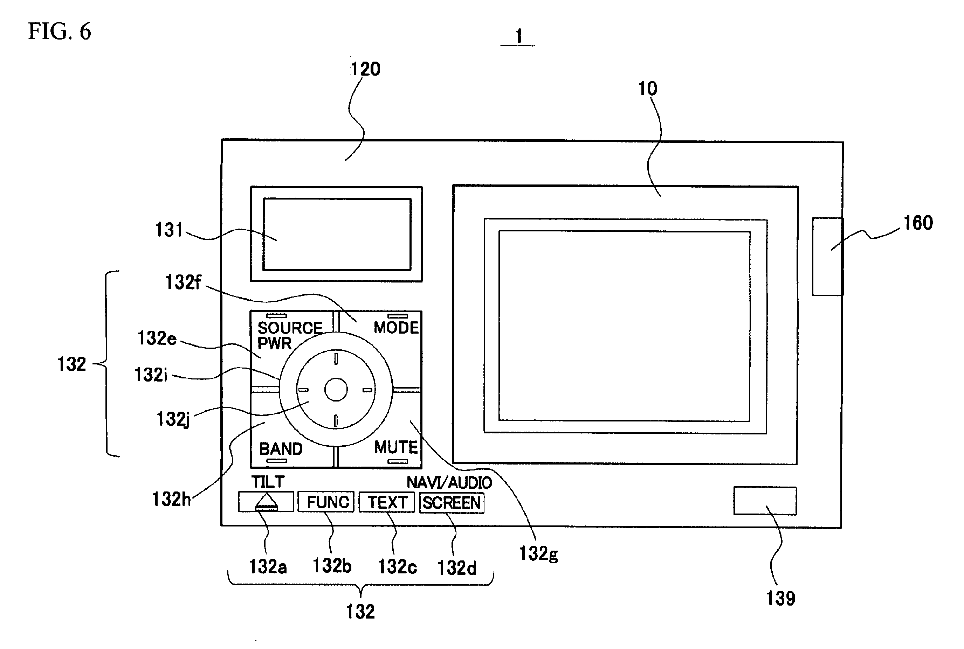

FIG. 6 is a front view of a main body;

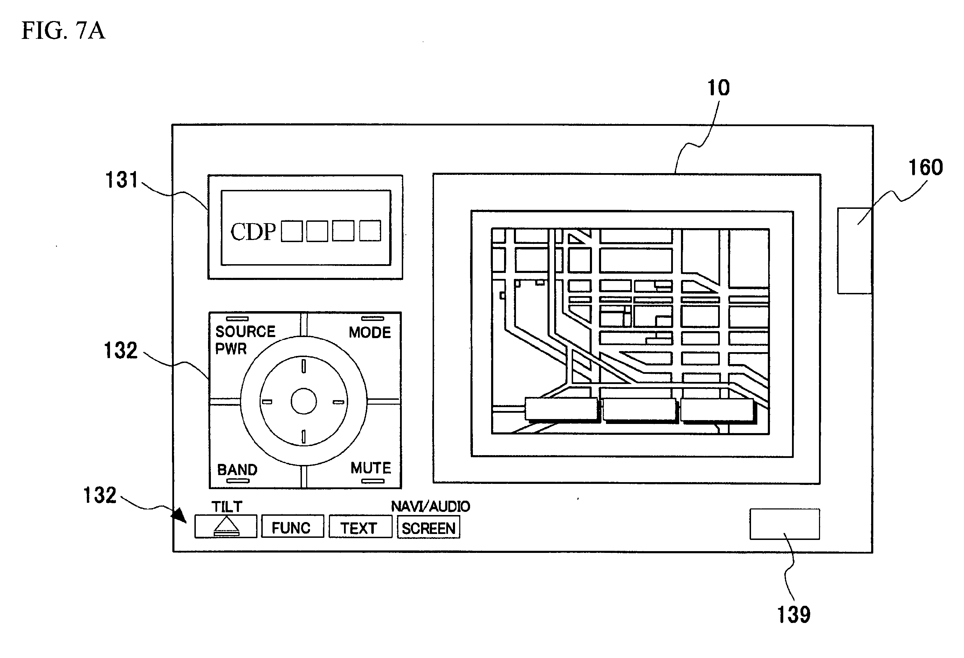

FIG. 7A through FIG. 7C show display examples of the portable apparatus attached to the main body;

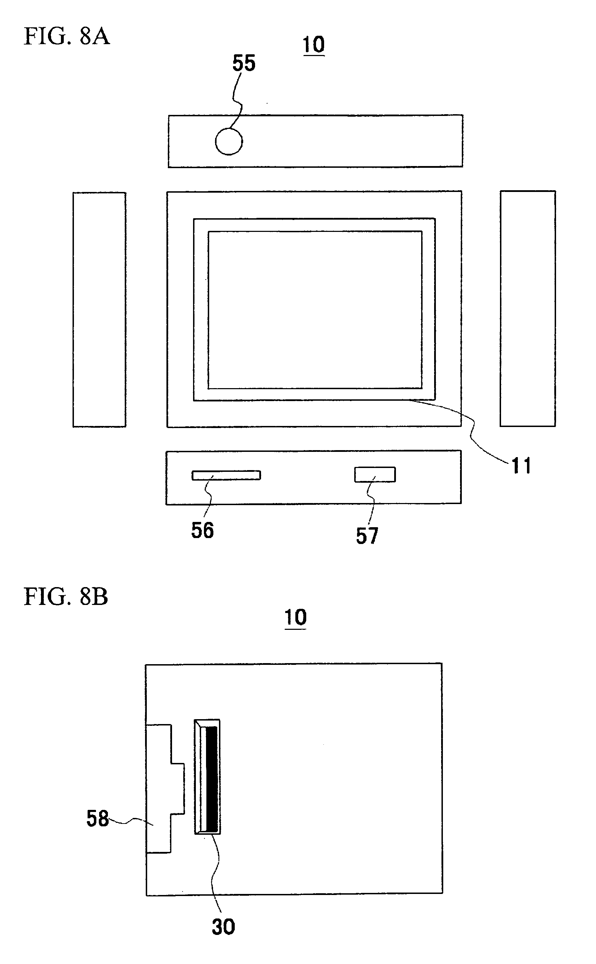

FIG. 8A shows a front view, top view, bottom view, left-side view, and right-side view of the portable apparatus, and FIG. 8B is a back view of the portable apparatus;

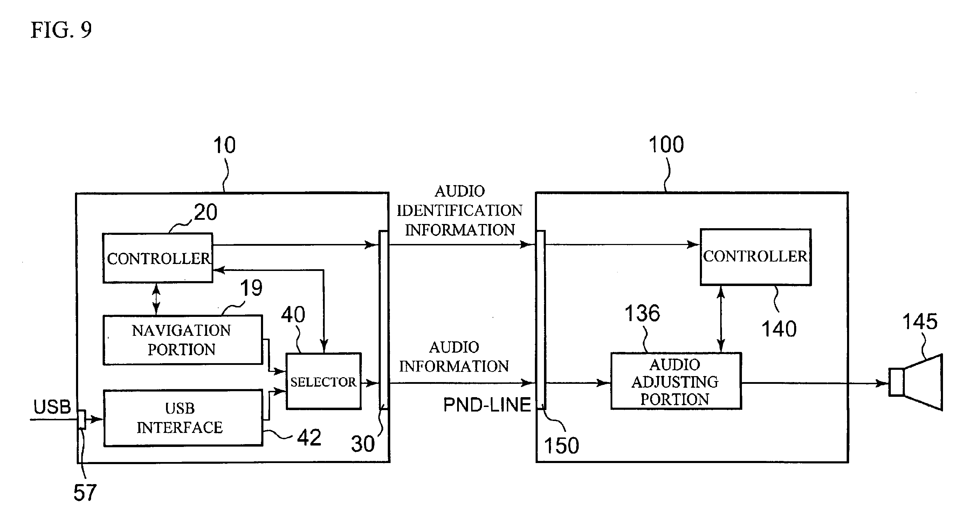

FIG. 9 is a view showing a navigation portion of the portable apparatus and an audio adjusting portion of the in-vehicle apparatus;

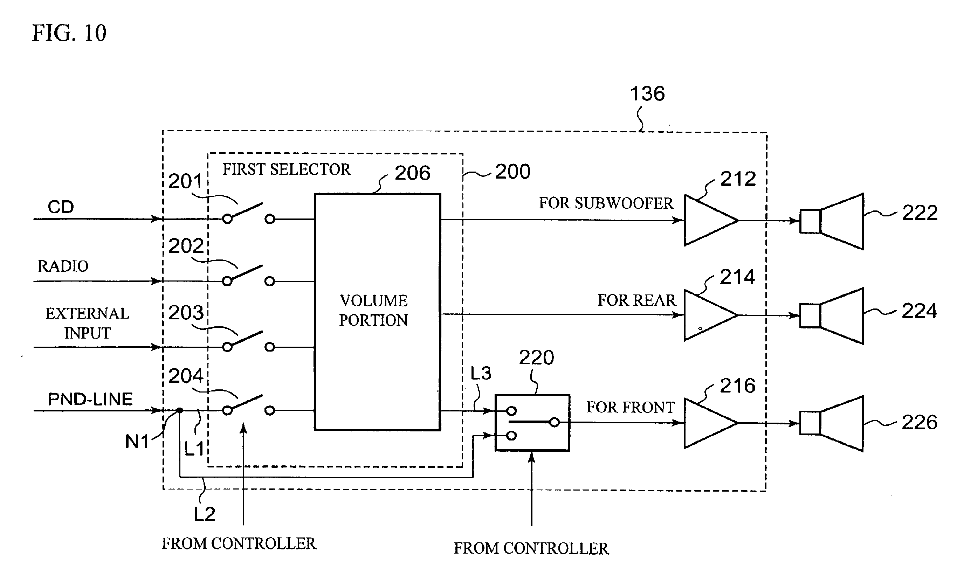

FIG. 10 is a detailed block diagram of the audio adjusting portion;

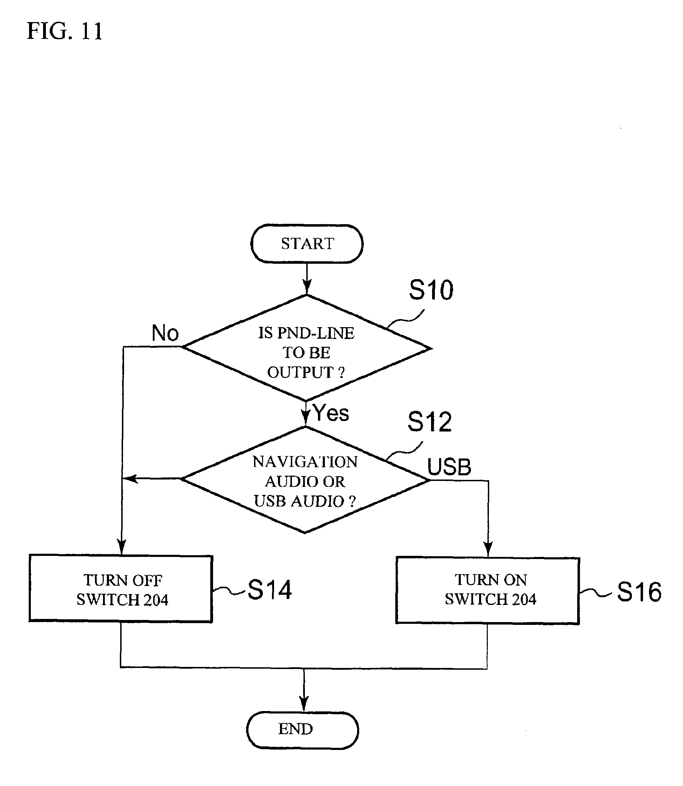

FIG. 11 is a flowchart showing operations of a first selector; and

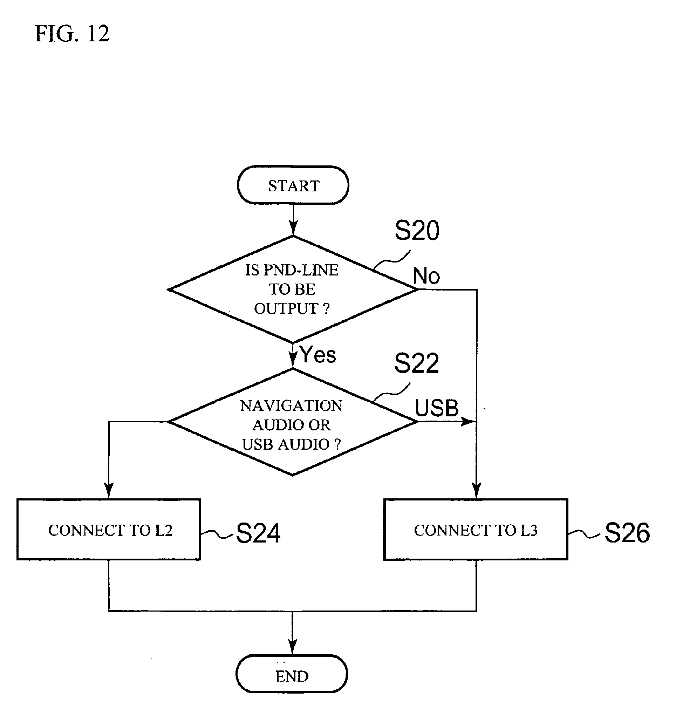

FIG. 12 is a flowchart showing operations of a second selector.

A description will now be given, with reference to the accompanying drawings, of exemplary embodiments of the present invention.

### (First Exemplary Embodiment)

FIG. 1A and FIG. 1B show exterior views of an in-vehicle system 1, as an example of an electronic system. As shown in FIG. 1A and FIG. 1B, the in-vehicle system 1 is composed of: an in-vehicle apparatus 100 (in-vehicle electronic apparatus); and a portable apparatus 10 (portable navigation apparatus) with navigation capabilities. The portable apparatus 10 can be used after being attached at a front face portion 120 of the in-vehicle apparatus 100, as shown in FIG. 1A, and can be also used after being detached from the in-vehicle apparatus 100, as shown in FIG. 1B. In this manner, the portable apparatus 10 is detachable from the in-vehicle apparatus 100, and the portable apparatus 10 is attachable to the in-vehicle apparatus 100.

The in-vehicle apparatus 100 is capable of playing radio broadcasting or playing music data recorded on a memory medium such as a CD (Compact Disc) or the like, and the in-vehicle apparatus 100 includes: an in-vehicle apparatus main body 110 having a CD player and a CD insertion/ejection slot; and the front face portion 120 having a display portion 131 and an operating portion (main operating portion) 132.

The portable apparatus 10 has navigation capabilities of searching for a guiding path (route) to a destination and displaying the searched guiding path (route) over a map.

FIG. 2 shows the front face portion (panel) 120 of the in-vehicle apparatus 100, from which the portable apparatus 10 is removed. There is provided an attached/detached (housing) portion 170 in which a recess portion is defined for attaching the portable apparatus 10, at the front face portion 120 of the in-vehicle apparatus 100. The attached/detached portion 170 is provided with: a connector 150 (housing portion side connector) for electrically coupling the in-vehicle apparatus 100 and the portable apparatus 10; and a lock mechanism (not shown) for securing the portable apparatus 10 to the front face portion 120. When a detach button 160 provided at the front face portion 120 is operated, a lock mechanism, not shown, is unlocked and the portable apparatus 10 is detachable from the in-vehicle apparatus 100.

FIG. 3 shows a state of tilting the front face portion 120 against the in-vehicle apparatus main body 110 to expose a CD insertion/ejection slot 180.

By driving a slider 181 shown in FIG. 3 with a drive mechanism, not shown, the front face portion 120 can be tilted against the in-vehicle apparatus main body 110. By tilting operation, the CD insertion/ejection slot 180 provided in the in-vehicle apparatus main body 110 is exposed, so a CD can be inserted or ejected. There is provided an operation button (a tilt/eject button 132a shown in FIG. 6), at the front face portion 120 of the in-vehicle apparatus 100, and a tilt angle can be set according to the operation of the button.

FIG. 4 illustrates an example of mounting the in-vehicle system 1 in a vehicle.

The in-vehicle system 1 is disposed in a dashboard portion substantially in the middle of a front-passenger's seat 51 and a driver's seat 52, as shown in FIG. 4, for example.

Here, a GPS (Global Positioning System) antenna, not shown, of a GPS information receiver 133 is located on the dashboard or attached at an inner side of a front glass (windscreen).

FIG. 5 is a block diagram showing a schematic configuration of the in-vehicle system 1.

The in-vehicle apparatus 100 and the portable apparatus 10 are electrically connected by connectors. The connector 150 is provided at the in-vehicle apparatus 100 side, and a connector 30 (portable apparatus side connector) is provided at the portable apparatus 10. By connecting the connectors 150 and 30, various signals are sent and received between the in-vehicle apparatus 100 and the portable apparatus 10 to function as the in-vehicle system 1. The connectors 150 and 30 are respectively provided with power supply terminals for supplying power to the portable apparatus 10 from the battery of the vehicle. When the portable apparatus 10 is connected to the in-vehicle apparatus 100 and the power is supplied to the in-vehicle apparatus 100, the power is also supplied to the portable apparatus 10 via the power supply terminals.

The in-vehicle apparatus 100 is provided with:
the display portion 131; the operating portion 132; the GPS information receiver 133; a radio receiver 134; a CD player 135; an audio adjusting portion 136; a memory 137; a microphone 138; an external voice/image inputting portion 139; a controller 140; and the connector 150. The in-vehicle apparatus 100 is activated by supplying power from the battery of the vehicle, when the engine key is positioned at Acc or IG.

Hereinafter, the function of each part will be described in detail.

The display portion 131 is provided with a liquid crystal panel and a backlight, and displays a frequency of the received broadcasting, a track number of music being played, a music name being played, and the like, according to the 13-segment display.

The operating portion 132 is provided for selectively changing the operation mode of the in-vehicle apparatus 100, and for operating in various modes that have been changed. The operating portion 132 is provided with a group of buttons including: the tilt/eject button 132a; a function (represented as FUNC in the drawing)/AF button 132b; a TEXT button 132c; a SCREEN button 132d; a SOURCE/PWR button 132e; a MODE button 132f; a MUTE button 132g; a BAND change button 132h; a rotary button 132i; a cross key/enter key button 132j, as shown in FIG. 6.

Here, a description will be given of switching the display between the portable apparatus 10 and the in-vehicle apparatus 100.

Firstly, the in-vehicle apparatus 100 turns on when the SOURCE/POWER button 132e of the in-vehicle apparatus 100 is pushed. When the SOURCE/POWER button 132e is pushed for a short period of time while the portable apparatus 10 is on, the source is changed to the CD playing or radio broadcasting. At this time, the information on the selected source is displayed on the display portion 131 of the in-vehicle apparatus 100, and the navigation image is displayed on a display portion 11 of the portable apparatus 10, without relation to the source.

Next, when the SCREEN button 132d is pushed, the navigation image displayed on the display portion 11 of the portable apparatus 10 can be changed to an image corresponding to the source selected at the in-vehicle apparatus 100.

FIG. 7A shows a state where the portable apparatus 10 is attached to the in-vehicle apparatus 100 while the CD is being played and a navigation image is being displayed on the portable apparatus 10.

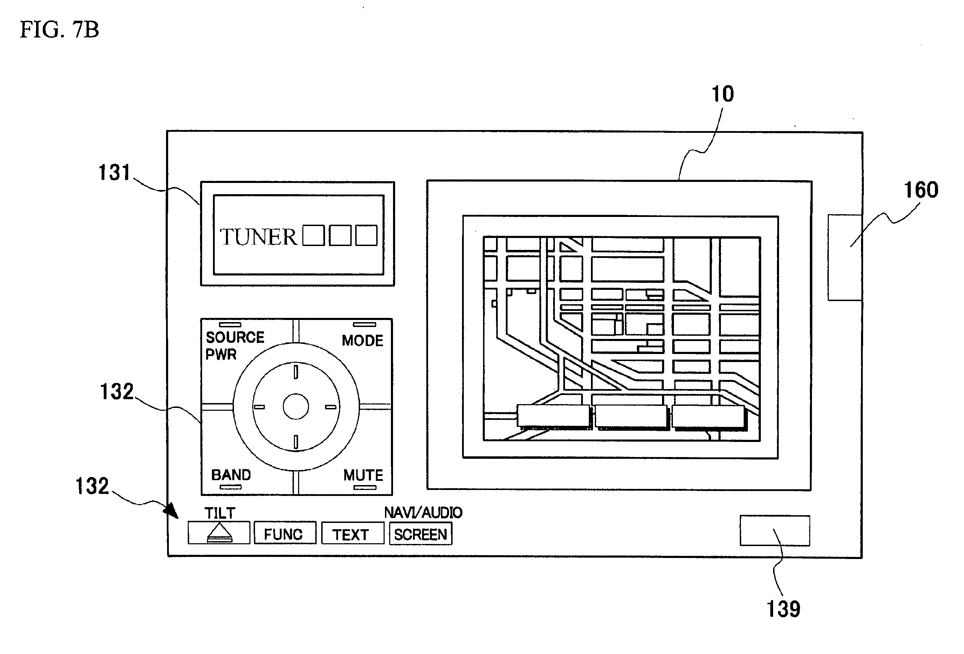

When the SOURCE/POWER button 132e is pushed in the state of FIG. 7A and the source is changed from the CD playing to the radio broadcasting, the information on the radio source is displayed on the display portion 131, as shown in FIG. 7B. Also, the navigation image remains displayed on the display portion 11 of the portable apparatus 10.

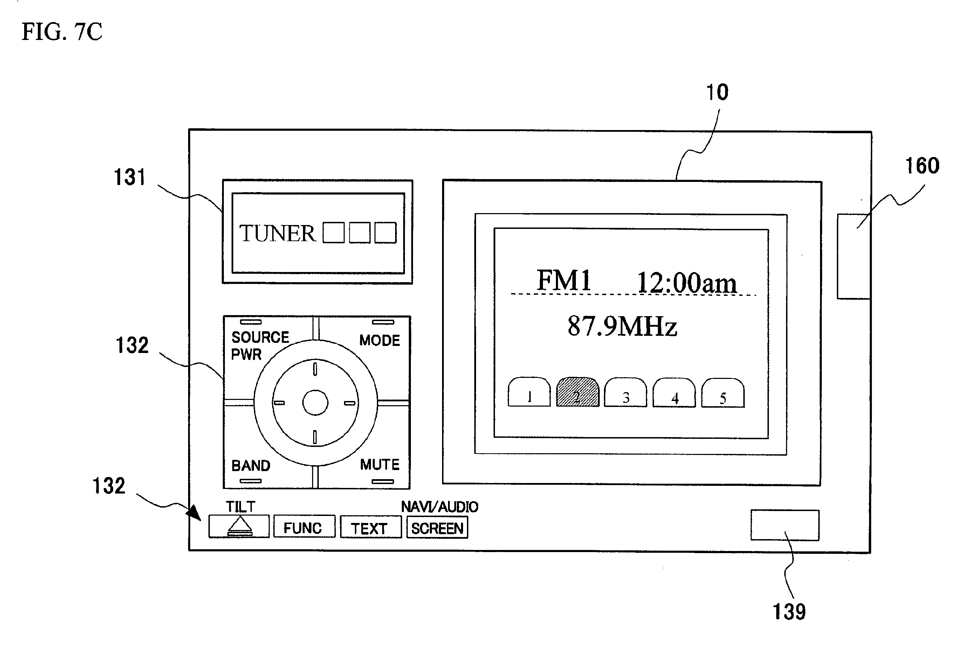

Then, when a user pushes the SCREEN button 132d, the image corresponding to the source being processed by the in-vehicle apparatus 100 is displayed on the display portion 11 of the portable apparatus 10, as shown in FIG. 7C (radio image is displayed in FIG. 7C). A touch panel, described later, is provided in the display portion 11 of the portable apparatus 10. A user is capable of operating the source currently being processed, by selecting the operation buttons displayed on the display portion 11.

In addition, when the SCREEN button 132d is pushed with the radio screen being displayed on the display portion 11, it is possible to return to the navigation image from the radio image, as shown in FIG. 7B. When the portable apparatus 10 is removed from the in-vehicle apparatus 100, the operation of the SCREEN button 132d is invalid.

Furthermore, when a USB (Universal Serial Bus) or the like is connected to the external voice/image inputting portion 139 with the portable apparatus 10 removed from the in-vehicle apparatus 100, it is possible to prevent the change to the USB source, even if the SOURCE/POWER button 132e is pushed.

Referring back to FIG. 5, the GPS information receiver 133 includes a GPS antenna and a tuner, and receives GPS signals from a satellite. The GPS signal received by the GPS information receiver 133 is output through the controller 140, the connector 150, the connector 30, and a controller 20, to a navigation portion 19 of the portable apparatus 10, and then the position of the vehicle in which the in-vehicle apparatus 100 having the portable apparatus 10 therein is determined based on the GPS signal.

Herein, the GPS signal may be output to the navigation portion of the portable apparatus 10 through the controller 140, instead of through the controller 20. Alternatively, the GPS information receiver 133 may be composed of the GPS antenna only, so that the GPS signal received by the GPS antenna may be output to the tuner of a GPS information receiver 13, described later, without passing through the controller 140 or the controller 20. Further alternatively, the GPS signal received by a GPS antenna may be output through the controller 20 to the tuner of the GPS information receiver 13 without passing through the controller 140. Various changes may be made as necessary.

The radio receiver 134 has an antenna and a tuner, receives broadcast waves such as AM broadcasting, FM broadcasting, and sound multiplex broadcasting, outputs stereo audio signals, receives and demodulates multiplex data, and outputs the demodulated signal to the controller 140.

The CD player 135 reproduces the data stored in the CD, and outputs the reproduced signal to the controller 140.

Herein, the demodulated signal output from the radio receiver 134 may be output to the audio adjusting portion 136, described later, without passing through the controller 140.

The audio adjusting portion 136 implements signal processing such as volume control or tone control on an audio signal received or demodulated by the radio receiver 134 or the audio signal reproduced by the CD player 135, and then outputs the processed signal to a speaker 145.

The memory 137 may be composed of a RAM (Random Access Memory) from which data is readable and into which data is writable, and temporarily stores information necessary for control.

The microphone 138 is provided for hands-free communication, and takes in users' voices in the vehicle.

The external voice/image inputting portion 139 is provided with a connection terminal for connection with an external device such as a USB memory, portable audio device, or the like so that an audio signal or data from the external device may be input. The external voice/image inputting portion 139 then sends the signal or data to the controller 140, and outputs the audio signal, data, or the like to the external device connected.

The controller 140 controls the radio receiver 134, the CD player 135, and the audio adjusting portion 136, according to the operation by means of the operating portion 132.

Also, the controller 140 outputs various signals through the connector 150 to the portable apparatus 10, and controls the in-vehicle apparatus 100 on the basis of the various signals input from the portable apparatus 10. For example, the controller 140 outputs the GPS signal received by the GPS information receiver 133 or the audio signal input through the microphone 138, to the portable apparatus 10 by way of the connector 150.

Here, the audio signal input through the microphone 138 may be output to the portable apparatus 10 by way of the connector 150, without going through the controller 140.

In addition, the voice on communication over a mobile phone connected to the portable apparatus 10 is input through the connector 150 into the controller 140, and is then output through the audio adjusting portion 136 to the speaker 145.

Furthermore, the controller 140 acquires an operation signal corresponding to a menu image of various modes displayed on the display portion 11 of the portable apparatus 10, from the controller 20 of the portable apparatus 10, and then controls the radio receiver 134 and the CD player 135.

Also, the power is supplied to the controller 140 from the battery mounted in the vehicle. When the portable apparatus 10 is connected, the controller 140 outputs the power supplied from the battery to the portable apparatus 10.

Here, a vehicle speed pulse and an illumination power supply signal are input into the controller 140 from a vehicle. The controller 140 transfers such input vehicle speed pulse to the controller 20 of the portable apparatus 10. Meanwhile, the vehicle speed pulse may be configured not to be input into the in-vehicle apparatus 100.

Next, a description will be given of the portable apparatus 10. The portable apparatus 10 is provided with: the display portion 11; an operating portion 12; the GPS information receiver 13; a speaker 14; a rechargeable battery 15; a charge circuit 16; a wireless communication transmitter/receiver 17; a memory 18; the navigation portion 19; the controller 20; and the connector 30.

Hereinafter, functions of the components will be described in detail.

The display portion 11 is provided with a liquid crystal panel and a backlight, and is capable of displaying map information generated by the navigation portion 19 and guiding path (route) information to a destination, the received broadcasting frequency transferred from the in-vehicle apparatus 100, a music track number played, music name played, and the like.

Here, the display portions 11 and 131 may employ a flat panel display other than a liquid crystal panel. Examples are organic light emitting display, plasma display panel, cold-cathode flat panel display, or the like.

The operating portion 12 includes a power button 55 (see FIG. 8A) for powering on or off the touch panel or the portable apparatus 10. The touch panel is, for example, disposed on the display screen. When the touch panel is touched by a finger or a dedicated pen, the touched position is detected to determine whether or not there is an input operation. The power button 55 will be described later in detail.

The GPS information receiver 13 includes an antenna and a tuner, and receives the GPS signal from a satellite. Such received GPS signal is output to the navigation portion 19, and the vehicle location is detected based on the GPS signal. Meanwhile, the in-vehicle apparatus 100 is also provided with the GPS information receiver 133. However, when the portable apparatus 10 is attached to the in-vehicle apparatus 100, the location of the vehicle, in which the in-vehicle apparatus 100 having the portable apparatus 10 is mounted, is specified by use of the GPS signal (and the vehicle speed pulse) received by the GPS information receiver 133. When the portable apparatus 10 is used alone, the location thereof is specified by use of the GPS signal received by the GPS information receiver 13.

The speaker 14 is provided for outputting the audio information of the navigation portion 19, and outputs the audio information only when the portable apparatus 10 is detached from the in-vehicle apparatus 100, namely, used alone separately.

The rechargeable battery 15 supplies power to each portion of the portable apparatus 10, when the portable apparatus 10 is detached from the in-vehicle apparatus 100. When the portable apparatus 10 is attached to the in-vehicle apparatus 100, power is supplied through the power supply terminals of the connector 30 from the battery of the vehicle and the rechargeable battery 15 is charged by the charge circuit 16. Also, the charge circuit 16 can be supplied with power from the connection terminal through a USB slot 57 (see FIG. 8A), and the rechargeable battery 15 can be charged thereby.

The wireless communication transmitter/receiver 17 sends and receives the voice on communication over a mobile phone, and acquires the information used for navigation over the mobile phone. For example, Bluetooth, which is a wireless transmission system at 2.4 GHz band, is used for the wireless communication transmitter/receiver 17.

The memory 18 may be a RAM from which data is readable and into which the data is writable, and temporarily stores the information read for each control.

The navigation portion 19 includes a map information storing portion that acquires from an SD (Secure Digital) card or a USB memory, described later, and stores the map information used for navigation, determines current location information with GPS signal from the GPS information receiver 133 or the GPS information receiver 13, and creates a map image for navigation. The created map image can be displayed on the display portion 11. In addition, when the in-vehicle apparatus 100 and the portable apparatus 10 are connected, the vehicle speed pulse is acquired from the vehicle so that the accuracy of the location detection of the vehicle can be improved. Optionally, the map information may be retained in the portable apparatus 10.

The controller 20 controls each part of the portable apparatus 10. Also, the controller 20 outputs various signals to the in-vehicle apparatus 100 through the connector 30, and controls the portable apparatus 10 based on the various signals input from the in-vehicle apparatus 100. For example, the controller 20 acquires the GPS signal received by the GPS information receiver 133 of the in-vehicle apparatus 100 and the vehicle speed pulse, and outputs them to the navigation portion 19. Also, the controller 20 acquires the audio signal input by the microphone 138 of the in-vehicle apparatus 100 from the controller 140 of the in-vehicle apparatus 100, and controls the navigation portion 19 according to the audio signal acquired. That is to say, the navigation portion 19 can be operated in a hands-free manner. The voice on communication over the mobile phone connected to the wireless communication transmitter/receiver 17 is output to an in-vehicle apparatus side through the connector 30, and is caused to output from the speaker 145 of the in-vehicle apparatus 100. The operation signal on the menu screen or content screen displayed on the display portion 11 is output to the controller 140 of the in-vehicle apparatus 100 through the connector 30. The controller 140 controls the radio receiver 134 or the CD player 135 according to the operation signal transmitted from the controller 20 of the portable apparatus 10.

FIG. 8A shows a front view, top view, bottom view, left-side view, and right-side view of the portable apparatus 10. FIG. 8B is a back view of the portable apparatus 10.

The top face of the portable apparatus 10 is provided with the power button 55 for turning on or off the power of the portable apparatus. The bottom face of the portable apparatus 10 is provided with: an SD memory card slot 56; and the USB slot 57. By inserting the SD card or the USB memory storing the map information into the slots, the controller 20 reads the map information from the SD card or the USB memory and outputs the map information to the navigation portion 19.

The power of the portable apparatus 10 is turned on or off by the control of the in-vehicle apparatus 100, when the portable apparatus is attached to the in-vehicle apparatus 100. In addition, when the portable apparatus 10 is removed from the in-vehicle apparatus 100 and used alone, the power is operated on the basis of the on and off operations of the power button 55.

At a backside of the portable apparatus 10, there are provided: the connector 30 electrically connected with the in-vehicle apparatus 100; and an engagement portion 58 to be engaged with a lock mechanism (not shown) provided at the in-vehicle apparatus 100 side.

FIG. 9 shows the connections between the navigation portion 19 of the portable apparatus 10 and the audio adjusting portion 136 of the in-vehicle apparatus 100 in more detail than shown in FIG. 5. Referring to FIG. 9, USB audio information such as music or the like is externally input through the USB slot 57 to the portable apparatus 10. The USB music information is converted into an audio outputable format by a USB interface 42. Meanwhile, the navigation portion 19 outputs navigation audio information. A selector 40 selects either the navigation audio information or the USB audio information, according to the control of the controller 20, and sends the selected information via the connector 30 to the in-vehicle apparatus 100.

The controller 20 outputs audio identification information for identifying whether the audio information sent to the in-vehicle apparatus 100 is the navigation audio information (first audio information) or the USB audio information (second audio information), from the connector 30 to the in-vehicle apparatus 100.

In the in-vehicle apparatus 100, the audio information is received from the connector 150 by way of a single connecting line PND-LINE (receiver). The connecting line PND-LINE is input into the audio adjusting portion 136 (audio selector). The audio adjusting portion 136 outputs the audio information to the speaker 145 (audio outputting portion) according to an instruction of the controller 140.

FIG. 10 is a block diagram of the audio adjusting portion 136. The connecting line PND-LINE transmitting the audio information input from the portable apparatus 10 branches at a node N1 provided inside or outside of the audio adjusting portion 136 into a first connecting line L1 (first line) and a second connecting line L2 (second line). The first connecting line L1 is input into a switch 204 of a first selector 200. The second connecting line L2 is input into a second selector 220.

The audio adjusting portion 136 includes: the first selector 200; the second selector 220; and amplifiers 212 through 216. The first selector 200 includes: a switch 201 connecting the audio information input from the CD player 135 (see FIG. 5) to a volume portion 206; a switch 202 connecting the audio information input from the radio receiver 134 (see FIG. 5) to the volume portion 206; a switch 203 connecting the audio information externally input from a portable music player or the like to the volume portion 206; the switch 204 connecting the audio information input by way of the first connecting line L1 from the portable apparatus 10 to the volume portion 206; and the volume portion 206. One piece of the audio information input into the audio adjusting portion 136 is selected by the switches 201 through 204 and fed to the volume portion 206. The volume portion 206 variably controls the volume level of the audio information, and branches the audio information to output to subwoofers (including left and right ones), rear seats (including left and right ones), and front seats (including left and right ones).

The audio information for the subwoofers is amplified by the amplifier 212 and output to a speaker 222. The audio information for rear seats is amplified by the amplifier 214 and output to a speaker 224. The audio information for front (seats) is input through a third line L3 to the second selector 220. In addition, the second connecting line L2 is input into the second selector 220 without passing through the first selector 200. The second selector 220 connects either the second connecting line L2 or the third connecting line L3 to the amplifier 216 on the basis of an audio identification signal fed from the controller 140. Thus, the audio information for front is amplified by the amplifier 216 to be output to the speaker 226.

FIG. 11 is a flowchart showing control operations of the controller 140 to the first selector 200. The controller 140 determines whether the audio information of the connecting line PND-LINE is output to the speaker(s) 145 (step S10). For example, the output of the USB audio through the portable apparatus 10 is selected. Alternatively, if the audio identification information represents the output of the navigation audio, the controller 140 determines that the audio information of the connecting line PND-LINE is to be output. If it is No at step S10, the first selector 200 turns off the switch 204 (step S14). If it is Yes at step S10, the controller 140 determines whether the audio information of the connecting line PND-LINE is the navigation audio information or the USB audio information, based on the audio identification information (step S12). If it is the navigation audio, the first selector 200 turns off the switch 204 (step S14). Therefore, the audio information is not input into the volume portion 206. If it is the USB audio information at step S12, the controller 140 turns on the switch 204 of the first selector 200 (step S16). Accordingly, the audio information is input into the volume portion 206.

FIG. 12 is a flowchart showing the control operations of the controller 140 to the second selector 220. The controller 140 determines whether the audio information of the connecting line PND-LINE is output to the speaker 145 (step S20). For example, the output of the USB audio through the portable apparatus 10 is selected. Alternatively, if the audio identification information represents the output of the navigation audio, the controller 140 determines that the audio information of the connecting line PND-LINE is to be output. If it is No at step S20, the second selector 220 connects the third connecting line L3 for outputting the audio information for the front speakers of the car cabin at the first selector 200, to the amplifier 216 (step S26). In other words, an audio signal from one of the other sources (e.g. CD, radio etc) is output to the front if such a source is turned on. If it is Yes at step S20, the controller 140 determines whether the audio information of the connecting line PND-LINE is the navigation audio information or the USB audio information, based on the audio identification information (step S22). If it is the navigation audio, the second selector 220 connects the second connecting line L2 to the amplifier 216 according to an instruction of the controller 140 (step S24). The navigation audio is thus output (solely) to the front speaker(s). If it is the USB audio information at step S22, the second selector 220 connects the third connecting line L3 to the amplifier 216, to output the USB audio to the front (step S26).

In accordance with a first exemplary embodiment, as shown in FIG. 9, the in-vehicle apparatus 100 (in-vehicle electronic apparatus) is provided with the connecting line PND-LINE for receiving the navigation audio information (first audio information) output from the portable apparatus 10 (portable navigation apparatus) and the USB audio information (second audio information) through the portable apparatus 10, as the audio information. Referring to FIG. 11 and FIG. 12, when the audio information is the navigation audio information, the audio adjusting portion 136 (audio selector) turns off the switch 204 of the first selector 200 to connect the second connecting line L2 to the amplifier 216 for front (step S24). Thus, the audio adjusting portion 136 outputs the audio information to the speaker 226 (audio outputting portion), which is at least one of the speakers 222 through 226. In other words, the navigation audio information is outputted to a subset of the speakers, for example solely to the speaker closest to the driver's seat. Meanwhile, when the audio information is the USB information, the audio adjusting portion 136 turns on the switch 204 (step S16) and the second selector 220 connects the third connecting line L3 to the amplifier 216 for front (step S26). Hence, the audio adjusting portion 136 outputs the audio information to multiple speakers 222 through 226.

Focusing on the first selector 200 and the second selector 220, the first selector 200 is connected to the first connecting line L1 (first line). If the audio information is the navigation audio information (first audio information), the audio information input into the first connecting line L1 is not output. If the audio information is the USB audio information (second audio information), the audio information input from the first connecting line L1 is output to all the speakers 222 through 226 (audio outputting portions). Also, the second selector 220 is connected to the second connecting line L2. If the audio information is the navigation audio information, the audio information input from the second connecting line L2 is output to at least one speaker 226 out of the speakers. If the audio information is the USB audio information, the audio information output from the first selector 200 is output to multiple speakers 222 through 226.

In accordance with the first exemplary embodiment, the navigation audio information and the USB audio information are received by a single connecting line PND-LINE, thereby necessitating only one connecting line and one connector and enabling the size and cost to be reduced. It is enough if the navigation audio can be heard by some of the passengers. In accordance with the first exemplary embodiment, it is possible to output the navigation audio from one speaker 226 out of the speakers, and output other audio information from all the speakers 222 through 226.

The driver is a passenger who mainly listens to the navigation guidance. Accordingly, one speaker to output the navigation audio is preferably the speaker 226 that outputs the audio to the driver. In the first exemplary embodiment, the navigation audio is output from the speaker 226 for left and right front seats; however, only the speaker at the driver's side, out of the speakers for the front seats, may output the navigation guidance.

Since the volume level of the navigation audio is controlled by the portable apparatus 10, the level may be constant at the in-vehicle apparatus 100. On the other hand, the USB audio is preferably controlled by the in-vehicle apparatus 100. Therefore, referring to FIG. 10, FIG. 11, and FIG. 12, if the audio information is the navigation audio information at the audio adjusting portion 136, the audio information does not pass through the volume portion 206. Accordingly, the volume level is fixed. On the other hand, the audio information passes through the volume portion 206, if the audio information is the USB audio information. Therefore, the audio adjusting portion 136 is capable of variably controlling the volume level.

Even if the USB audio information is not the audio information input into the portable apparatus 10 through the USB slot 57, the USB audio information may be the audio information connected through another interface or the audio information input into the in-vehicle apparatus 100 and output to the portable apparatus 10 then converted by the interface of the portable apparatus 10. For example, as shown in FIG. 9, when the portable apparatus 10 has the USB slot 57 and the USB interface 42 and if the in-vehicle apparatus 100 further includes the USB slot 57 and the USB interface 42, this impedes the reduction in size and cost. Hence, by utilizing the USB interface 42 of the portable apparatus 10, it is possible to further reduce the size and cost.

As shown in FIG. 9, based on the audio identification information representing whether the audio information output from the portable apparatus 10 is either the navigation audio information or the USB audio information, the audio adjusting portion 136 selects whether the audio information is to be output to all the speakers 222 through 226 or output to the speaker 226, at least one of the speakers, as shown in FIG. 11 and FIG. 12. In addition, the audio adjusting portion 136 selects whether or not the volume level is to be variably controlled or to be set constant, on the basis of the audio identification information. In this manner, the audio adjusting portion 136 is capable of making the above-described selection with ease by use of the audio identification information.

Since the audio identification information has a frequency that is not high, the connecting line transferring the audio identification information from the portable apparatus 10 to the in-vehicle apparatus 100 and the connector enable the reduction in size and cost more than those for audio information. As compared to two connecting lines and two connectors for audio information, the reduction in size and cost is possible. Furthermore, the audio identification information may be included in the audio information being transferred on the connecting line PND-LINE.

The portable apparatus 10 may be composed of a mobile phone with navigation capabilities, portable digital assistant (PDA), or the like. In addition, instead of the CD insertion/ejection slot 180 and the CD player 135, there may be provided an insertion/ejection slot and a player of a memory medium such as MD (Mini Disc), DVD (Digital Versatile Disc), memory card, or the like, and there may be provided multiple types of insertion/ejection slots and players.

Although a few specific exemplary embodiments employed in the present invention have been shown and described, it would be appreciated by those skilled in the art that changes may be made in these exemplary embodiments without departing from the invention, the scope of which is defined in the claims.

## Claims

1. An in-vehicle electronic apparatus (100), to which a portable navigation apparatus (10) is attachable, and which can output audio information to multiple audio outputting portions (135; 222, 224, 226), the in-vehicle electronic apparatus (100) comprising:
a receiver (150) for receiving as audio information, first audio information which is navigation audio information output by the portable navigation apparatus (10) and second audio information which is other audio information output through the portable navigation apparatus (10);
a controller (140) configured to control an audio selector (136) so that, when the portable navigation apparatus (10) is attached and the audio information is being received from the portable navigation apparatus (10), on the basis of audio identification information representing whether the audio information output from the portable navigation apparatus (10) is the first audio information or the second audio information, the audio selector (136) is configured to output the first audio information to a subset of the multiple audio outputting portions (226), when the received audio information is the first audio information, and to output the second audio information to all of the multiple audio outputting portions (222, 224, 226), when the received audio information is the second audio information; and
a single connecting line (PND-LINE) for receiving the first audio information and the second audio information from the portable navigation apparatus (10) when the portable navigation apparatus (10) is attached.

2. The in-vehicle electronic apparatus (100) as claimed in claim 1, wherein the subset of the multiple audio outputting portions (222, 224, 226) to which audio information is output is an audio outputting portion (226) for outputting audio to a driver's seat.

3. The in-vehicle electronic apparatus (100) as claimed in claim 1 or 2, wherein the audio selector (136) is operable to keep a volume level constant, when the received audio information is the first audio information, and wherein the audio selector (136) is operable to variably control the volume level, when the received audio information is the second audio information.

4. The in-vehicle electronic apparatus (100) as claimed in claim 1, 2 or 3, wherein the second audio information is audio information input into the portable navigation apparatus (10) through a USB connector (57).

5. The in-vehicle electronic apparatus (100) as claimed in any preceding claim, wherein the audio selector (136) is operable to select whether a volume level is to be variably controlled or to be kept constant, on the basis of audio identification information representing whether the audio information output from the portable navigation apparatus (10) is the first audio information or the second audio information.

6. The in-vehicle electronic apparatus (100) as claimed in any preceding claim, wherein the audio selector (136) includes:
a first selector (200) connected to a first line (L1) branched from the single connecting line (PND-LINE) serving as the receiver, the first selector (200) being configured not to output the audio information to be input from the first line (L1) when the audio information is the first audio information, and to output the audio information to be input from the first line (L1) to all the audio outputting portions (222, 224, 226) when the audio information is the second audio information; and
a second selector (220) connected to a second line (L2) branched from the connecting line (PND-LINE), the second selector (220) being configured to output the audio information to be input from the second line (L2) when the audio information is the first audio information, and to output the audio information to be output from the first selector (200) to at least one of the multiple audio outputting portions when the audio information is the second audio information.

7. An in-vehicle electronic system provided with a portable navigation apparatus (10) and an in-vehicle electronic apparatus (100) according to any of claims 1 to 6.

## Patentansprüche

1. Elektronisches Gerät (100) in Fahrzeugen, an welches in tragbares Navigationsgerät (10) anschließbar ist, und welches Audioinformation an mehrere Audioausgabeabschnitte (135; 222, 224, 226) ausgeben kann, das elektronische Gerät (100) in Fahrzeugen umfassend
einen Empfänger (150) zum Empfangen als Audioinformation erste Audioinformation, welche vom tragbaren Navigationsgerät (10) ausgegebene Navigationsaudioinformation ist, und zweite Audioinformation, welche weitere durch das tragbare Navigationsgerät (10) ausgegebene Navigationsaudioinformation ist;
eine Steuerung (140), ausgelegt zum Steuern eines Audioselektors (136), so dass, ist das tragbare Navigationsgerät (10) angeschlossen und wird die Audioinformation vom tragbaren Navigationsgerät (10) empfangen, auf der Basis von Audioidentifikationsinformation, die darstellt, ob die vom tragbaren Navigationsgerät (10) ausgegebene Audioinformation die erste Audioinformation oder die zweite Audioinformation ist, der Audioselektor (136) ausgelegt wird zum Ausgeben der ersten Audioinformation an eine Untergruppe aus den mehreren Audioausgabeabschnittes (226), wenn die empfangene Audioinformation die erste Audioinformation ist, und zum Ausgeben der zweiten Audioinformation an alle aus den mehreren Audioausgabeabschnitten (222, 224, 226), wenn die empfangene Audioinformation die zweite Audioinformation ist, und
eine einzelne Verbindungsleitung (PND-LINE) zum Empfangen der ersten Audioinformation und der zweiten Audioinformation vom tragbaren Navigationsgerät (10), wenn das tragbare Navigationsgerät (10) angeschlossen ist.

2. Elektronisches Gerät (100) in Fahrzeugen gemäß Anspruch 1, wobei die Untergruppe aus den mehreren Audioausgabeabschnitten (222, 224, 226), an welche Audioinformation ausgegeben wird, ein Audioausgabeabschnitt (226) für die Audioausgabe an einen Fahrersitz ist.

3. Elektronisches Gerät (100) in Fahrzeugen gemäß Anspruch 1 oder 2, wobei der Audioselektor (136) ausführbar ist, die Lautstärke gleichmäßig zu halten, wenn die empfangene Audioinformation die erste Audioinformation ist, und wobei der Audioselektor (136) ausführbar ist, die Lautstärke variabel zu steuern, wenn die empfangene Audioinformation die zweite Audioinformation ist.

4. Elektronisches Gerät (100) in Fahrzeugen gemäß Anspruch 1, 2 oder 3, wobei die zweite Audioinformation Audioinformation ist, eingegeben in das tragbare Navigationsgerät (10) über einen USB-Anschluss (57).

5. Elektronisches Gerät (100) in Fahrzeugen gemäß irgendeinem vorhergehenden Anspruch, wobei der Audioselektor (136) ausführbar ist zum Auswählen, ob eine Lautstärke variabel gesteuert oder konstant gehalten wird, auf der Basis von Audioidentifikationsinformation, die darstellt, ob die vom tragbaren Navigationsgerät (10) ausgegebene Audioinformation die erste Audioinformation oder die zweite Audioinformation ist.

6. Elektronisches Gerät (100) in Fahrzeugen gemäß irgendeinem vorhergehenden Anspruch, wobei der Audioselektor (136) umfasst
einen ersten Selektor (200), angeschlossen an eine erste von der als Empfänger dienenden einzelnen Verbindungsleitung (PND-LINE) abzweigende Leitung (L1), wobei der erste Selektor (200) ausgelegt ist, die von der ersten Leitung (L1) eingegebene Audioinformation nicht auszugeben, wenn die Audioinformation die erste Audioinformation ist, und die von der ersten Leitung (L1) eingegebene Audioinformation an alle Audioausgabeabschnitte (222, 224, 226) auszugeben, wenn die Audioinformation die zweite Audioinformation ist; und
einen zweiten Selektor (220), angeschlossen an eine zweite von der einzelnen Verbindungsleitung (PND-LINE) abzweigende Leitung (L2), wobei der zweite Selektor (220) ausgelegt ist, die von der ersten Leitung (L2) eingegebene Audioinformation auszugeben, wenn die Audioinformation die erste Audioinformation ist, und die vom ersten Selektor (200) auszugebende Audioinformation an mindestens einen aus den mehreren Ausgabeabschnitten auszugeben, wenn die Audioinformation die zweite Audioinformation ist.

7. Elektronisches System in Fahrzeugen, ausgestattet mit einem tragbaren Navigationsgerät (10) und einem elektronischen Gerät (100) in Fahrzeugen aus irgendeinem der Ansprüche 1 bis 6.

## Revendications

1. Appareil électronique embarqué (100), auquel un appareil de navigation portable (10) peut être fixé, et qui peut délivrer des informations audio à de multiples parties de sortie audio (135 ; 222, 224, 226), l'appareil électronique embarqué (100) comprenant :
un récepteur (150) pour recevoir, en tant qu'informations audio, des premières informations audio qui sont des informations audio de navigation délivrées par l'appareil de navigation portable (10) et des deuxièmes informations audio qui sont d'autres informations audio délivrées par l'appareil de navigation portable (10) ;
un contrôleur (140) configuré pour commander un sélecteur audio (136) de sorte que, lorsque l'appareil de navigation portable (10) est attaché et que les informations audio sont reçues de l'appareil de navigation portable (10), sur la base des informations d'identification audio indiquant si les informations audio délivrées par l'appareil de navigation portable (10) sont les premières informations audio ou les deuxièmes informations audio, le sélecteur audio (136) soit configuré pour délivrer les premières informations audio à un sous-ensemble de multiples parties de sortie audio (226), lorsque les informations audio reçues sont les premières informations audio, et pour délivrer les deuxièmes informations audio à toutes les multiples parties de sortie audio (222, 224, 226), lorsque les informations audio reçues sont les deuxièmes informations audio ; et
une ligne de connexion unique (PND-LINE) pour recevoir les premières informations audio et les deuxièmes informations audio de l'appareil de navigation portable (10) lorsque l'appareil de navigation portable (10) est attaché.

2. Appareil électronique embarqué (100) selon la revendication 1, dans lequel le sous-ensemble des multiples parties de sortie audio (222, 224, 226) auquel des informations audio sont délivrées est une partie de sortie audio (226) pour délivrer un signal audio au siège d'un conducteur.

3. Appareil électronique embarqué (100) selon la revendication 1 ou 2, dans lequel le sélecteur audio (136) peut être utilisé pour maintenir un niveau de volume constant, lorsque les informations audio reçues sont les premières informations audio, et dans lequel le sélecteur audio (136) peut être utilisé pour commander de manière variable le niveau de volume, lorsque les informations audio reçues sont les deuxièmes informations audio.

4. Appareil électronique embarqué (100) selon la revendication 1, 2 ou 3, dans lequel les deuxièmes informations audio sont des informations audio appliquées à l'appareil de navigation portable (10) par l'intermédiaire d'un connecteur USB (57).

5. Appareil électronique embarqué (100) selon l'une quelconque des revendications précédentes, dans lequel le sélecteur audio (136) peut être utilisé pour sélectionner si un niveau de volume doit être commandé de manière variable ou être maintenu constant, sur la base des informations d'identification audio indiquant si les informations audio délivrées par l'appareil de navigation portable (10) sont les premières informations audio ou les deuxièmes informations audio.

6. Appareil électronique embarqué (100) selon l'une quelconque des revendications précédentes, dans lequel le sélecteur audio (136) comprend :
un premier sélecteur (200) connecté à une première ligne (L1) dérivée de la ligne de connexion unique (PND-LINE) servant de récepteur, le premier sélecteur (200) étant configuré pour ne pas délivrer les informations audio devant être reçues de la première ligne (L1) lorsque les informations audio sont les premières informations audio, et pour délivrer les informations audio devant être reçues de la première ligne (L1) à toutes les parties de sortie audio (222, 224, 226) lorsque les informations audio sont les deuxièmes informations audio ; et
un deuxième sélecteur (220) connecté à une deuxième ligne (L2) dérivée de la ligne de connexion (PND-LINE), le deuxième sélecteur (220) étant configuré pour délivrer les informations audio devant être reçues de la deuxième ligne (L2) lorsque les informations audio sont les premières informations audio, et pour délivrer les informations audio devant être délivrées par le premier sélecteur (200) à au moins l'une des multiples parties de sortie audio lorsque les informations audio sont les deuxièmes informations audio.

7. Système électronique embarqué pourvu d'un appareil de navigation portable (10) et d'un appareil électronique embarqué (100) selon l'une quelconque des revendications 1 à 6.
